# EUROPEAN PATENT SPECIFICATION

(11) **EP 4 082 744 B1**
(45) Date of publication and mention of the grant of the patent: **25.10.2023**
(21) Application number: 22162736.7
(22) Date of filing: 17.03.2022
(51) Int. Cl.: B29C 44/18, B29C 44/32, B29C 44/60, E06B 9/00, B29K 75/00, B29L 31/00

(54) **LINE AND METHOD FOR PRODUCING SLATS FOR ROLLER SHUTTERS**
ANLAGE UND VERFAHREN ZUR HERSTELLUNG VON LAMELLEN FÜR ROLLLÄDEN
LIGNE ET PROCÉDÉ POUR PRODUIRE DES LATTES DE VOLETS ROULANTS

(30) Priority: 29.04.2021 IT 202100010883
(43) Date of publication of application: 02.11.2022
(73) Proprietor: Dallan S.p.A., 31033 Castelfranco Veneto (Treviso) (IT)
(72) Inventor: DALLAN, Andrea, 31033 Castelfranco Veneto TREVISO (IT)
(74) Representative: Zanettin, Gianluigi

(56) References cited:
- EP-A1- 2 574 440
- EP-A1- 2 857 627
- WO-A1-2013/095876
- DE-A1- 3 508 849

## Description

### Field of application

The subject of the present invention is a line and method for producing slats for roller shutters.

### Prior art

As is well known, roller shutters consist of a plurality of elongated profiles, referred to as "slats" in jargon, connected in a modular manner to each other longitudinally to form a jointed sheet.

Generally, each slat consists of a hollow box body, made of metal and internally filled with polyurethane foam (expanded polyurethane) to increase the structural strength of the slat, as well as its thermal insulation capacity.

Typically, the metal box-shaped body of a slat is obtained by bending and profiling a strip of sheet metal. During the profiling process, when the box-shaped body is still partially open with the inner cavity accessible, it is foamed. After foaming, the profile is cut to obtain foamed bars, which will then undergo mechanical processing (e.g. punching) to obtain the finished slats. EP 2 857 627 A1 discloses a production line of slats for roller shutters.

The polyurethane foaming process provides for the reagents (isocyanate and polyol) to be mixed together substantially only at the time of injection into the slat. The reagents are mixed in a mixing chamber associated with the injection nozzle so that polyurethane foam is essentially formed only within the slat. From the moment of foaming to the moment of cutting the foamed profile, at least thirty seconds must pass, which is the average time necessary for the mixture of the reagents to polymerize, generating polyurethane foam (expanded polyurethane). For this purpose, in a line for producing slats for shutters, between the foaming station and the cutting station, there is a polymerization bench, i.e., a section of the line where the foamed profile is left to slide without external intervention to allow the polyurethane foam to polymerize. The length of the polymerization bench is determined according to the working speed of the production line. For example, if the production line is running at a speed of 30 m/min, the length of the polymerization bench must be at least 15 m; if the line is running at a speed of 60 m/min, the length of said bench must be at least 30 m.

In general, lines for producing metal slats for roller shutters comprise sequentially the following apparatuses:
- a metal sheet decoiler;
- a metal sheet preheating bench (optional);
- a profiling machine;
- a foaming apparatus, integrated into the profiling machine;
- a polymerization bench;
- a closed foamed profile cutting apparatus for obtaining semi-finished slats;
- at least one mechanical processing apparatus (typically, a punching machine) for finishing the slats, connected to the cutting station via a device for collecting and transporting the semi-finished slats; and
- a bench for unloading of finished slats.

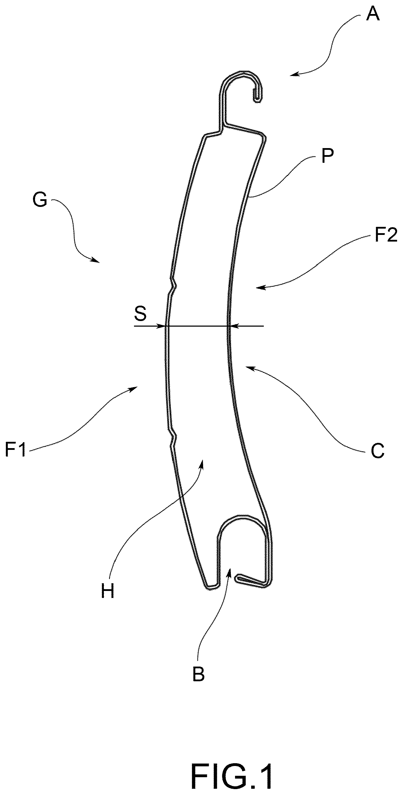

As is well known, one of the dimensional parameters that is evaluated to determine the conformity of a shutter slat is the thickness of the central portion of a finished slat. As illustrated in Fig. 1, referring to a cross-section of a slat G, conducted on a plane orthogonal to the direction of longitudinal development of said slat, the central portion C is the portion of the slat G interposed between an upper hooking appendage A and a lower hooking cavity B and corresponds to the inner cavity H of the hollow, box section profile, filled with polyurethane foam. The thickness S of the central portion C of a slat G is defined as the distance between the two main faces F1 and F2 of the slat G that delimit the inner cavity H. Generally, the thickness S is measured at an intermediate position of the central portion C of the slat G.

This thickness S must be within a predetermined tolerance range. If this thickness S is too thin, it may mean that the slat is not well filled with polyurethane foam. In this case, the slat must be discarded, as it may not meet the required mechanical strength and thermal insulation characteristics. If, on the other hand, the thickness S is too high, it may mean that the slat is overfilled with foam. In this case, the slat must be discarded as, not conforming to the dimensional tolerances provided, it could prevent the correct operation of the shutter in which it was inserted in use.

For these reasons, in the production of slats for roller shutters, production waste due to the detection of thicknesses that do not conform to the dimensional tolerances of the slats are not negligible.

In this sector, there is still an unsatisfied need to reduce production waste due to the failure to respect the dimensional tolerances of the slats produced in relation to the thickness of the central portion.

### Disclosure of the invention

Thus, it is a main object of the present invention to eliminate in whole or in part the drawbacks of the aforementioned prior art by providing a line and a method for producing slats for roller shutters that allow for a significant reduction in production waste associated with the failure to meet the dimensional tolerances of the slats produced in relation to the thickness of the central portion.

A further object of the present invention is to provide a production line and a method for producing slats for roller shutters that are operationally simple to control and at the same time reliable.

### Brief description of the drawings

The technical features of the invention, according to the aforesaid objects, may clearly be seen in the content of the claims below, and its advantages will become more readily apparent in the detailed description that follows, made with reference to the appended drawings, which represent one or more purely illustrative and non-limiting embodiments thereof, wherein:
- Fig. 1 shows an orthogonal cross-sectional view of a traditional slat for roller shutters;
- Fig. 2a shows an orthogonal plan view of the lay-out of a shutter slat production line according to a preferred embodiment of the invention;
- Fig. 2b and 2c show two detail views of two portions of the line of Fig. 1;

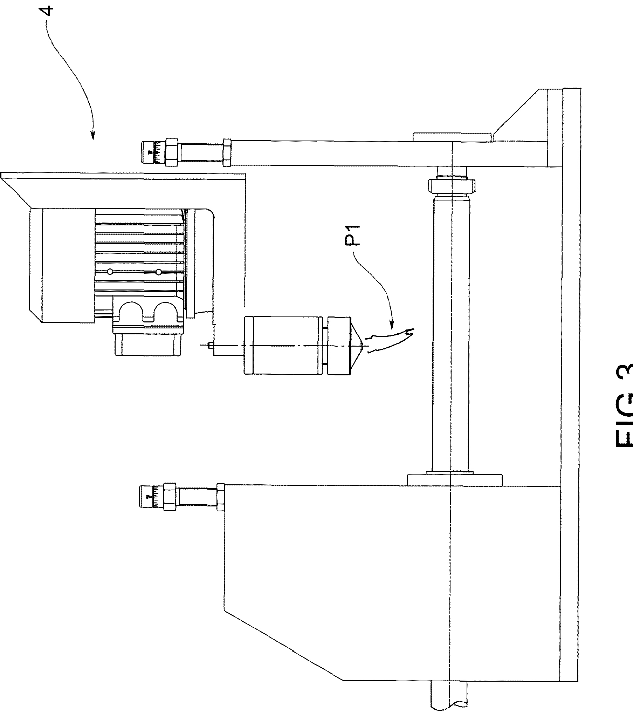

- Fig. 3 shows a simplified cross-sectional view of the line of Fig. 1 according to the cross-sectional plane III-III shown therein and conducted at a foaming machine;

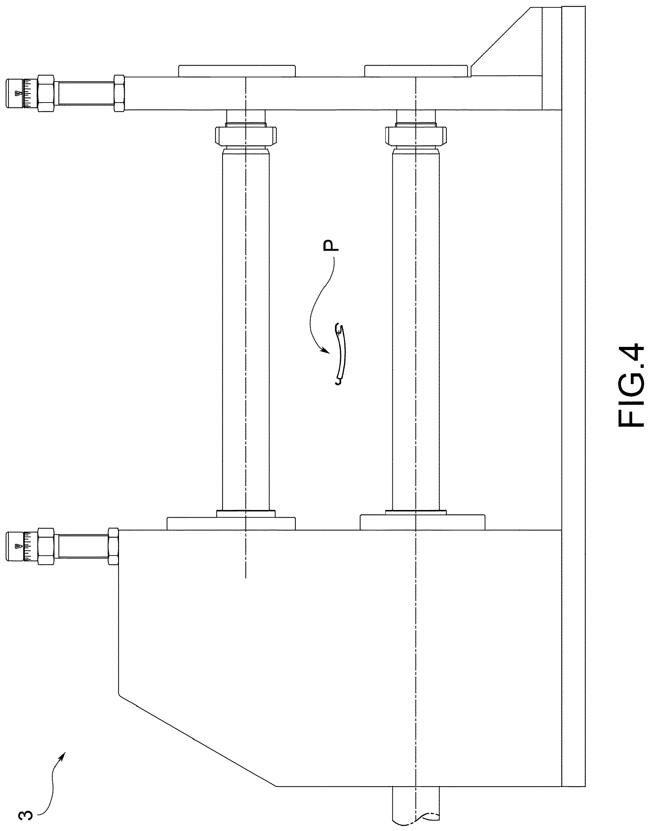

- Fig. 4 shows a simplified cross-sectional view of the line of Fig. 1 according to the cross-sectional plane IV-IV shown therein and conducted at a profiling machine, downstream of the foaming machine;
- Fig. 5 shows a simplified cross-sectional view of the line of Fig. 1 according to the cross-sectional plane V-V shown therein and conducted at a guide device for the slats;
- Fig. 6 shows a simplified cross-sectional view of the line of Fig. 1 according to the cross-sectional plane VI-VI shown therein and conducted at a non-contact laser thickness measurer; and
- Fig. 7 shows a simplified cross-sectional view of the line of Fig. 1 according to the cross-sectional plane VI-VI shown therein, according to an alternative embodiment to that shown in Fig. 6, and conducted at a non-contact thickness measurer.

### Detailed description

A production line for producing slats for roller shutters according to the invention has been denoted as a whole with the reference number 1 in the appended figures.

Here and in the rest of the description and the claims, reference will be made to the line 1 in the condition of use. Therefore, any references to a lower or upper position or to a horizontal or vertical orientation should be interpreted in this sense.

According to a general embodiment of the invention, the production line 1 for producing slats for roller shutters comprises:
- a profiling machine 3, suitable to form a closed, hollow, box section profile from a strip of sheet metal;
- a foaming machine 4, integrated in the profiling machine 3 and suitable to dose into the partially open, hollow, box section profile P1 that has being formed a predetermined amount of a polyol/isocyanate mixture in the unit of time; and
- a polymerization bench 5, which is arranged downstream of the profiling machine 3 to obtain a foamed, closed, hollow, box section profile P2.

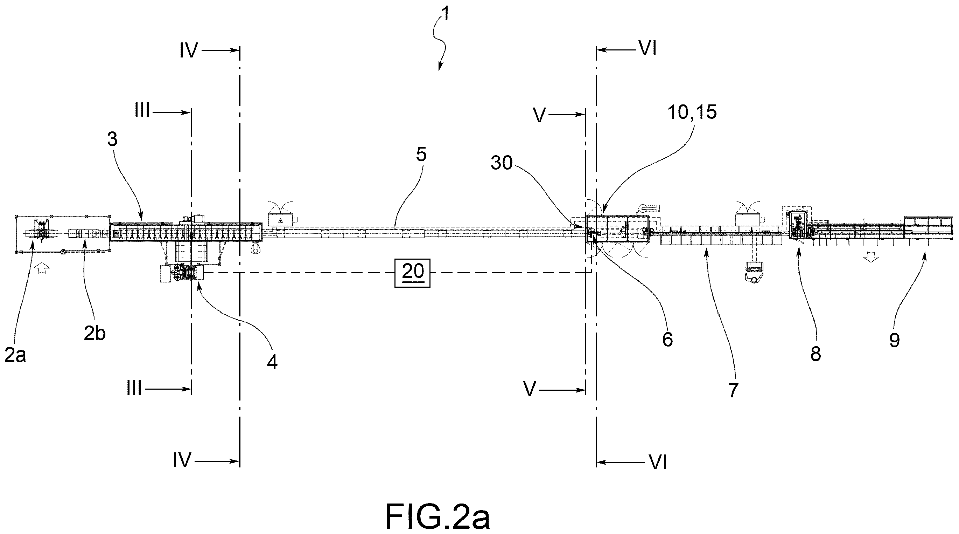

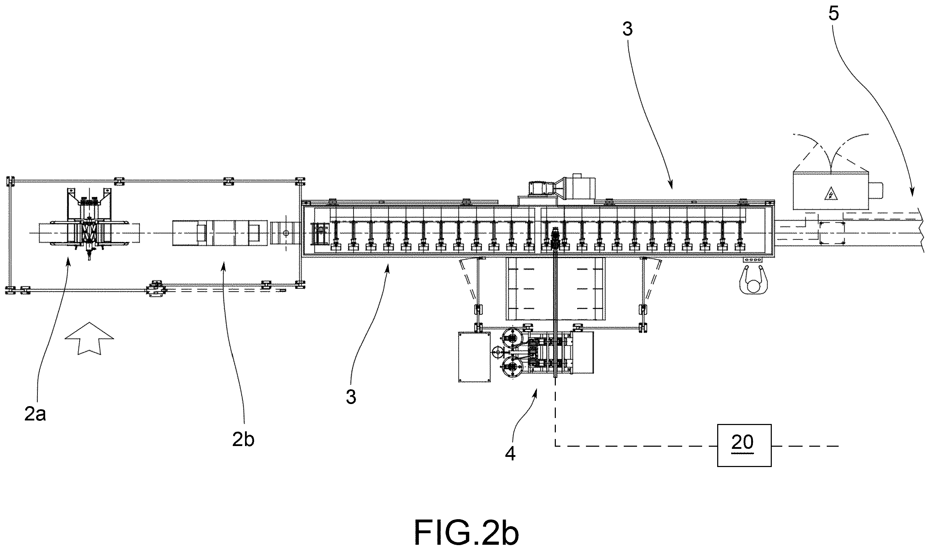

Advantageously, as illustrated in Fig. 2a and 2b, upstream of the profiling machine 3, the slat production line 1 may further comprise:
- a decoiler 2a of the sheet metal that feeds the production line 1; and
- a sheet metal preheating bench 2b.

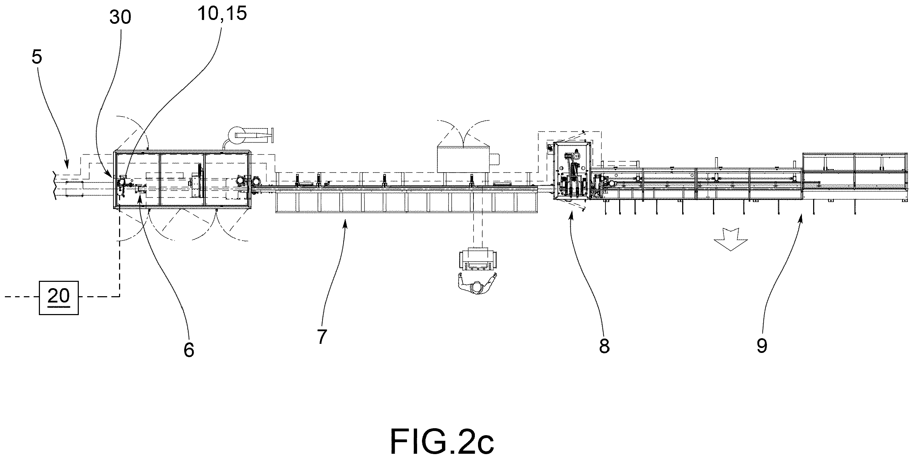

Advantageously, as illustrated in Fig. 2a and 2c, downstream of the polymerization bench 5, the slat production line 1 may further comprise a cutting apparatus 6 that is suitable to cut the foamed, closed, hollow, box section profile P2) to obtain semi-finished slats G of a predetermined length.

Advantageously, as illustrated in Fig. 2a and 2c, downstream of the cutting apparatus 6, the slat production line 1 may further comprise:
- at least one mechanical processing apparatus 8 (typically, a punching machine) for finishing the slats, which is connected to the cutting apparatus via a device for collecting and transporting the semi-finished slats; and
- an unloading bench 9 for the finished slats.

According to the invention, the slat production line 1 comprises a thickness measurer 10 or 15 suitable to measure in line the thickness S of a predetermined central portion C of the foamed, closed, hollow, box section profile P2.

As shown in Fig. 2a and 2c, the thickness measurer 10 or 15 is arranged downstream of the polymerization bench 5.

Preferably, the thickness measurer 10 or 15 is arranged between the polymerization bench 5 and the cutting apparatus 6.

According to the invention, the slat production line 1 further comprises a control system 20, which is connected to the foaming machine 4 and the thickness measurer 10 and is programmed to adjust the amount of polyol/isocyanate mixture dosed in the unit of time by the foaming machine 4 as a function of the thickness detected by said thickness measurer 10 or 15 according to predetermined adjustment logics suitable to keep said thickness S within a predetermined tolerance range.

Due to the invention, it is thus possible to monitor (preferably continuously but possibly also discontinuously) the thickness S of a predetermined central portion C of the foamed, closed, hollow, box section profile P2 while it has being produced by the line 1 so as to check whether the thickness S remains within a predetermined tolerance range. Operationally, if a thickness S is detected that is outside this predetermined tolerance range, it is possible to adjust by means of the control system 20 - by applying predetermined adjustment logics - the quantity of polyol/isocyanate mixture dosed in the unit of time by the foaming machine 4 so that the thickness S falls within the predetermined tolerance range.

Due to the invention, in case of anomalies in the thickness of the slats, it is therefore possible to modify the production in real time, significantly reducing the production waste related to the failure to respect the dimensional tolerances of the slats produced in relation to the thickness of the central portion.

In particular, the control system 20 is programmed to:
- increase the amount of polyol/isocyanate mixture dosed in the unit of time by the foaming machine 4 if the thickness detected by said thickness measurer 10 or 15 is less than a predetermined minimum threshold thickness; and
- decrease the amount of polyol/isocyanate mixture dosed in the unit of time by the foaming machine 4 if the thickness detected by said thickness measurer 10 or 15 is greater than a predetermined maximum threshold thickness.

Advantageously, any feedback control logic suitable for the purpose may be applied.

Preferably, the thickness measurer is a non-contact thickness measurer 10.

The non-contact thickness measurer 10 may be any type of thickness measurer suitable for the purpose. Specifically, it may be a laser or ultrasonic thickness measurer.

According to a particularly preferred embodiment of the invention, the aforesaid non-contact thickness measurer is a laser thickness measurer 10. In fact, a laser thickness measurer is able to offer superior measurement accuracy, on the order of 1/100 of a millimeter.

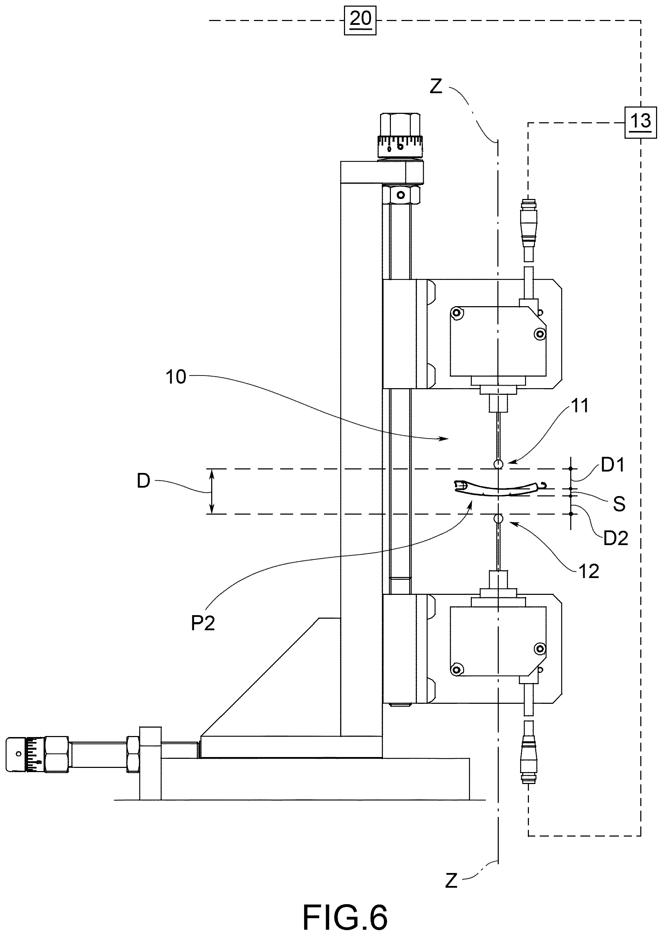

In particular, as illustrated in Fig. 6, the laser thickness measurer 10 comprises two laser sensors 11, 12 that are arranged at a predetermined distance D from each other to delimit a through aperture L for a foamed, closed, hollow, box section profile P2 through said laser thickness measurer 10. Operationally, each laser sensor 11, 12 acts as a laser emitter and a laser receiver.

The laser thickness measurer 10 further comprises a data processing unit 13 which is connected to both said laser sensors 11, 12 and is programmed to calculate the thickness S of a foamed, closed, hollow, box section profile P2 passing through said through aperture L as the difference between the predetermined distance D between said two sensors 11, 12 and the distances D1, D2 of said foamed, closed, hollow, box section profile P2 from said two laser sensors 11, 12: S = D - (D1 + D2) .

Operationally, as illustrated in Fig. 6, the foamed, closed, hollow, box section profile P2 is passed through the laser thickness measurer 10 in such a way that the profile P is oriented with its thickness S aligned with the two sensors 11, 12. Thus, each sensor 11, 12 faces one of the two main faces of the foamed, closed, hollow, box section profile P2 (corresponding to the two faces F1, F2 of the finished slat).

A laser thickness measurer is inherently familiar to a person skilled in the art and will therefore not be described in greater detail.

Alternatively, the thickness measurer may be a contact thickness measurer 15.

The contact thickness measurer 15 may be a thickness measurer of any type suitable for the purpose.

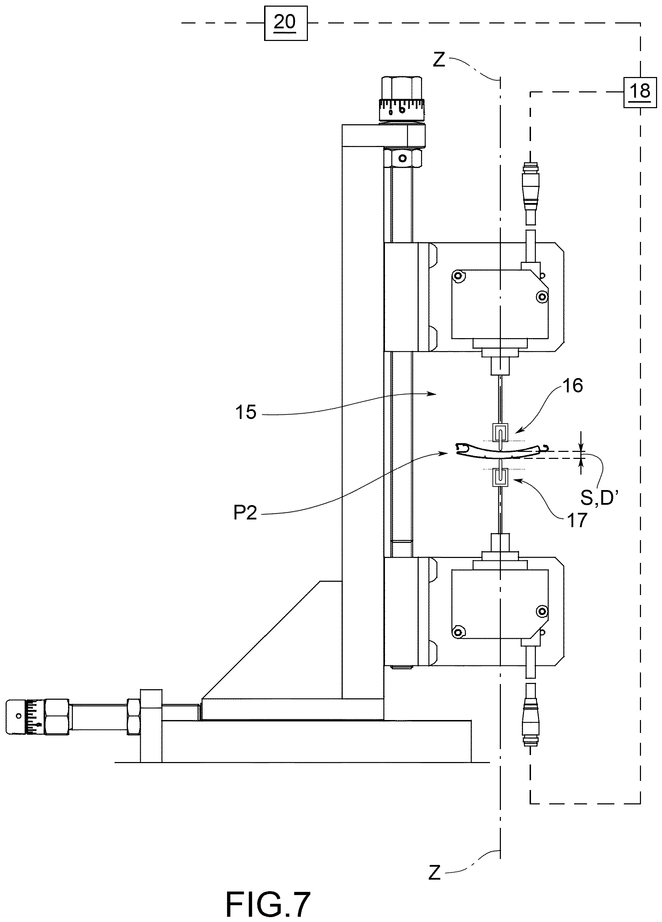

Preferably, according to the alternative embodiment illustrated in Fig. 7, the contact thickness measurer 15 comprises two opposite roller feelers 16, 17 and a data processing unit 18 that is connected to both said two roller feelers 16, 17 and is programmed to calculate the thickness S of a foamed, closed, hollow, box section profile P2 that slides between said two roller feelers 16, 17 in contact with both, as a distance D' between said two roller feelers 16, 17.

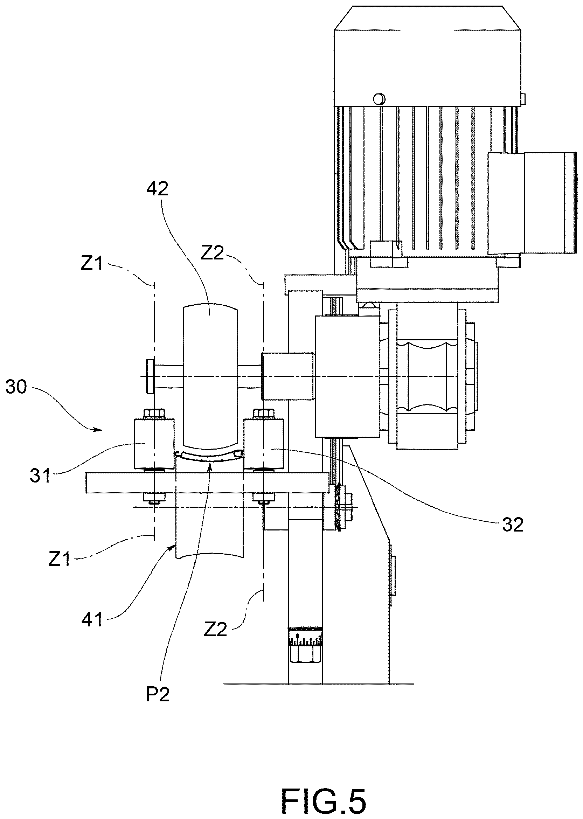

Preferably, as illustrated in Fig. 2a, 2c and 5, the slat production line 1 comprises a guide device 30 suitable to guide the foamed, closed, hollow, box section profile P2 in the vicinity of the thickness measurer 10 or 15 such that the foamed, closed, hollow, box section profile P2 passes through the thickness measurer 10 and 15, always exposing the same section of said predetermined central portion C to the thickness measurement.

Operationally, the foamed hollow, box section profile P may be subject to vibrations related to its sliding along the production line 1. Said vibrations could adversely affect the accuracy of the thickness measurement. The aforesaid guide device 30 serves to reduce the effect of said vibrations on the accuracy of the thickness measurement by stabilizing the sliding position of the profile P at the thickness measurer 10 or 15 relative to a direction Z of the thickness measurement S.

In particular, as illustrated in Fig. 5, the aforesaid guide device 30 consists of two idle rollers 31 and 32, spaced apart from each other, between which the foamed, hollow, box section profile P is passed. The two idle rollers 31 and 32 have axes Z1 and Z2 (in particular, vertical) parallel to the measurement direction Z for measuring the thickness S. Operationally, the two idle rollers 31 and 32 guide the profile P laterally, thus putting a first roller in contact with the hooking appendage A and the other roller with the portion that delimits the hooking cavity B.

The aforesaid guide device 30 may be arranged immediately upstream or immediately downstream of said thickness measurer 10 or 15.

Advantageously, as illustrated in Fig. 5, the production line 1 may comprise two extractor rollers 41, 42 (preferably arranged downstream of the polymerization bench 5) that are operated to complete the extraction of the end portions of the foamed, closed, hollow, box section profile P2 when a coil of sheet metal is used up and the profiling machine 3 (no longer acting on the profile) is no longer able to push the profile along the line 1.

The subject of the present invention is also a method for producing slats for roller shutters.

In particular, the method according to the invention is implemented by means of a line for producing slats for shutters, in particular such as the one that is the subject of the present invention and in particular as described above. For this reason, the method is described below using the same numerical references used to describe the line for producing slats for shutters.

According to a general embodiment of the invention, the method for producing slats for roller shutters comprises the following operational steps:
- a) forming a closed, hollow, box section profile from a strip of sheet metal using a profiling machine 3;
- b) dosing into the hollow, partially open box section profile P1 while it has being formed during step a) a predetermined amount of a polyol/isocyanate mixture in the unit of time using a foaming machine 4, integrated into the profiling machine 3;
- c) allowing the polyol/isocyanate mixture to polymerize until an expanded polyurethane foam is completely formed inside the closed, hollow, box section profile, so that a foamed, closed, hollow, box section profile P2 is obtained.

According to the invention, the production method comprises the further operational steps of:
- d) measuring the thickness S of a predetermined central portion C of the foamed, closed, hollow, box section profile P2 by means of an in-line thickness measurer 10 or 15; and
- e) adjusting the amount of polyol/isocyanate mixture dosed in the unit of time by the foaming machine 4 according to the thickness S detected by said thickness measurer 10 according to predetermined adjustment logics aimed at keeping said thickness S within a predetermined tolerance range.

In particular, the aforesaid adjustment step e) is conducted so as to:
- increase the amount of polyol/isocyanate mixture dosed in the unit of time by the foaming machine 4 if the thickness detected by said thickness measurer 10 or 15 is less than a predetermined minimum threshold thickness; and
- decrease the amount of polyol/isocyanate mixture dosed in the unit of time by the foaming machine 4 if the thickness detected by said thickness measurer 10 or 15 is greater than a predetermined maximum threshold thickness.

Advantageously, the production method comprises the further operational step f) of cutting the foamed, closed, hollow, box section profile P2 by means of a cutting apparatus 6 to obtain semi-finished slats G of a predetermined length. This step f) is conducted on a section of foamed, closed, hollow, box section profile P2 that has already undergone step d) of measuring the thickness S.

Preferably, the measurement step d) is conducted using a non-contact thickness measurer 10.

In particular, the aforesaid non-contact thickness measurer is a laser thickness measurer 10.

More particularly, as illustrated in Fig. 6, the laser thickness measurer 10 comprises two laser sensors 11, 12 which are arranged at a predetermined distance D from each other to delimit a through aperture L for a foamed, closed, hollow, box section profile P2 through said laser thickness measurer 10. Operationally, each laser sensor 11, 12 acts as a laser emitter and a laser receiver.

The laser thickness measurer 10 further comprises a data processing unit 13 which is connected to both said laser sensors 11, 12 and is programmed to calculate the thickness S of a foamed, closed, hollow, box section profile P2 passing through said through aperture L as the difference between the predetermined distance D between said two sensors 11, 12 and the distances D1, D2 of said foamed, closed, hollow, box section profile P2 from said two laser sensors 11, 12: S = D - (D1 + D2) .

Alternatively the measurement step d) may be conducted using a contact thickness measurer 15.

In particular, as illustrated in Fig. 7, the contact thickness measurer 15 comprises two opposite roller feelers 16, 17 and a data processing unit 18 that is connected to both said two roller feelers 16, 17 and is programmed to calculate the thickness S of a foamed, closed, hollow, box section profile P2 that slides between said two roller feelers 16, 17 in contact with each other as the distance D' between said two sliding feelers 16, 17.

Preferably, the production method comprises the further operational step g) of guiding the foamed, closed, hollow, box section profile P2 in the vicinity of said thickness measurer 10 or 15 such that the foamed, closed, hollow, box section profile P2 passes through the thickness measurer 10 or 15 always exposing the same section of said predetermined central portion C to the thickness measurement.

The advantages associated with the application of the production method according to the invention are the same as those described in relation to the production line 1 according to the invention and will not be presented again for brevity of exposition.

The invention provides numerous advantages, some of which have already been described.

The production line and method for producing slats for roller shutters according to the invention allow for a significant reduction in production waste associated with the failure to meet dimensional tolerances of the slats produced in relation to the thickness of the central portion.

The production line and method for producing slats for roller shutters according to the invention are also operationally simple to control and at the same time reliable.

The invention thus conceived therefore achieves its intended objects.

Obviously, in its practical embodiment, it may also assume shapes and configurations different from the one shown above according to the claims.

Moreover, all details may be replaced by technically equivalent elements and the dimensions, the shapes, and the materials employed may be any, depending on the needs.

## Claims

1. Production line (1) of slats for roller shutters, comprising:
- a profiling machine (3) suitable to form a closed, hollow, box section profile from a metal strip;
- a foaming machine (4), integrated in the profiling machine (3) and suitable to dose into the hollow, box section profile, partially open (P1) while it has being formed, a predetermined quantity of a mixture of polyol and isocyanate in a unit of time; and
- a polymerization bench (5), which is placed downstream of the profiling machine (3) to obtain a foamed, closed, hollow, box section profile (P2);
**characterized in that** it comprises a thickness measurer (10; 15) suitable for measuring in line the thickness (S) of a predefined central portion (C) of the foamed, closed, hollow, box section profile (P2), wherein said thickness measurer (10, 15) is placed downstream of said polymerization bench (5), and **in that** it comprises a control system (20) connected to said foaming machine (4) and to said thickness measurer (10) and programmed to adjust the quantity of polyol/isocyanate mixture dosed in the unit of time by the foaming machine (4) depending on the thickness measured by said thickness measurer (10; 15) according to predefined adjustment logics suitable to keep said thickness (S) within a predetermined tolerance range.

2. The line (1) according to claim 1, wherein said control system (20) is programmed to:
- increase the quantity of polyol/isocyanate mixture dosed in the unit of time by the foaming machine (4) if the thickness measured by said thickness measurer (10; 15) is less than a predetermined minimum threshold thickness; and
- decrease the quantity of polyol/isocyanate mixture dosed in the unit of time by the foaming machine (4) if the thickness measured by said thickness measurer (10; 15) is greater than a predetermined maximum threshold thickness.

3. The line (1) according to claim 1 or 2, further comprising a cutting apparatus (6) which is placed downstream of said polymerization bench (5) and is suitable to cut the foamed, closed, hollow, box section profile (P2) to obtain semi-finished slats (G) of a predetermined length, wherein said thickness measurer (10; 15) is placed between said polymerization bench (5) and said cutting apparatus (6).

4. The line (1) according to any of the claims from 1 to 3, wherein the thickness measurer is a non-contact thickness measurer (10).

5. The line (1) according to claim 4, wherein said non-contact thickness measurer is a laser thickness measurer (10) .

6. The line (1) according to claim 5, wherein said laser thickness measurer (10) comprises two laser sensors (11, 12) which are arranged at a predetermined distance (G) from each other to delimit a through aperture for a foamed, closed, hollow, box section profile (P2) through said laser thickness measurer (10), wherein each laser sensor (11, 12) acts as a laser emitter and as a laser receiver and wherein said laser thickness measurer (10) comprises a data processing unit (13) which is connected to both said laser sensors (11, 12) and is programmed to calculate the thickness (S) of a foamed, closed, hollow, box section profile (P2) passing through said through aperture (L) as the difference between the predetermined distance (G) between said two sensors (11, 12) and the distances (D1, D2) of said foamed, closed, hollow, box section profile (P2) from said two laser sensors (11, 12) .

7. The line (1) according to the claims from 1 to 3, wherein the thickness measurer is a contact thickness measurer (15).

8. The line (1) according to claim 7, wherein the contact thickness measurer (15) comprises two opposite roller feelers (16, 17) and a data processing unit (18) which is connected to both said roller feelers (16, 17) and is programmed to calculate the thickness (S) of a foamed, closed, hollow, box section profile (P2) sliding between said two roller feelers (16, 17) in contact with both as a distance (D') between said two roller feelers (16, 17) .

9. The line (1) according to any of the preceding claims, comprising a guide device (30) suitable for guiding the foamed, closed, hollow, box section profile (P2) in the vicinity of said thickness measurer (10; 15) so that the foamed, closed, hollow, box section profile (P2) passes through the thickness measurer (10; 15) always exposing the same section of said predetermined central portion (C) to the thickness measurement.

10. The line (1) according to claim 9, wherein said guide device (30) is placed immediately upstream or immediately downstream of said thickness measurer (10; 15) .

11. Production method of slats for roller shutters, comprising the following operating steps:
- (a) forming a closed hollow box section profile from a strip of metal sheet by means of a profiling machine (3);
- (b) dosing into the hollow, box section profile, partially open (P1) while it has being formed a predetermined quantity of a mixture of polyol and isocyanate in a unit of time by means of a foaming machine (4), integrated in the profiling machine (3);
- (c) allowing the mixture of polyol and isocyanate to polymerize until a polyurethane foam is completely formed inside the closed, hollow, box section profile, so as to obtain a foamed, closed, hollow, box section profile (P2) ;
**characterized in that** it comprises the further operating steps of:
- (d) measuring the thickness (S) of a predetermined central portion (C) of the foamed, closed, hollow, box section profile by means of an in-line thickness measurer (10; 15); and
- e) adjusting the quantity of polyol/isocyanate mixture dosed in the unit of time by the foaming machine (4) depending on the thickness (S) detected by said thickness measurer (10) according to predefined adjustment logics aimed at keeping said thickness (S) within a predefined tolerance range.

12. The method according to claim 11, wherein said adjustment step e) is conducted so as to:
- increase the quantity of polyol/isocyanate mixture dosed in the unit of time by the foaming machine (4) if the thickness measured by said thickness measurer (10; 15) is less than a predetermined minimum threshold thickness; and
- decrease the quantity of polyol/isocyanate mixture dosed in the unit of time by the foaming machine (4) if the thickness measured by said thickness measurer (10; 15) is greater than a predetermined maximum threshold thickness.

13. The method according to claim 11 or 12, further comprising the operating step f) of cutting the foamed, closed, hollow, box section profile (P2) by means of a cutting apparatus (6) to obtain semi-finished slats (G) of a predetermined length, wherein said step f) is conducted on a section of foamed, closed, hollow, box section profile (P2) already subjected to step d) of measuring the thickness (S).

14. The method according to any of the claims from 11 to 13, wherein the measuring step d) is conducted by means of a non-contact thickness measurer (10).

15. The method according to claim 14, wherein said non-contact thickness measurer is a laser thickness measurer (10) .

16. The method according to claim 15, wherein said laser thickness measurer (10) comprises two laser sensors (11, 12) which are arranged at a predetermined distance (G) from each other to delimit a through aperture (L) for a foamed, closed, hollow, box section profile (P2) through said laser thickness measurer (10), wherein each laser sensor (11, 12) acts as a laser emitter and as a laser receiver and wherein said laser thickness measurer (10) comprises a data processing unit (13) which is connected to both said laser sensors (11, 12) and is programmed to calculate the thickness of a foamed, closed, hollow, box section profile (P2) passing through said through aperture as the difference between the distance (G) between said two sensors (11, 12) and the distances (D1, D2) of said foamed, closed, hollow, box section profile (P2) from said two laser sensors (11, 12).

17. The method according to any of the claims from 11 to 13, wherein the measuring step d) is conducted by means of a contact thickness measurer (15).

18. The method according to claim 17, wherein the contact thickness measurer (15) comprises two opposite roller feelers (16, 17) and a data processing unit (18) which is connected to both said roller feelers (16, 17) and is programmed to calculate the thickness (S) of a foamed, closed, hollow, box section profile (P2) sliding between said two roller feelers (16, 17) in contact with both as a distance (D') between said two roller feelers (16, 17) .

19. The method according to any of the claims from 11 to 18, comprising a further step g) of guiding the foamed, closed, hollow, box section profile (P2) in the vicinity of said thickness measurer (10; 15) so that the foamed, closed, hollow, box section profile (P2) passes through the thickness measurer (10; 15) always exposing the same section of said predetermined central portion (C) to the thickness measurement.

## Patentansprüche

1. Eine Herstellungsanlage (1) für Rollladen-Lamellen, die Folgendes umfasst:
- eine Profilier-Maschine (3), die geeignet ist, ein geschlossenes, hohles Kastenprofil aus einem Metallband zu formen;
- eine Schäumungs-Maschine (4), die in die Profilier-Maschine (3) integriert ist und geeignet ist, eine vorbestimmte Menge einer Mischung aus Polyol und Isocyanat in einer Zeiteinheit in das hohle, teilweise offene Kastenprofil (P1) zu dosieren, während es geformt wird; und
- eine Polymerisationsbank (5), die stromabwärts der Profilier-Maschine (3) angeordnet ist, um ein geschäumtes, geschlossenes, hohles Kastenprofil (P2) zu erhalten;
**dadurch gekennzeichnet, dass** sie ein Dickenmessgerät (10; 15) umfasst, die geeignet ist, die Dicke (S) eines vordefinierten zentralen Abschnitts (C) des geschäumten, geschlossenen, hohlen Kastenprofils (P2) *inline* zu messen, wobei das genannte Dickenmessgerät (10, 15) stromabwärts der genannten Polymerisationsbank (5) angeordnet ist, **und dass** sie ein Steuersystem (20) umfasst, das mit der genannten Schäumungs-Maschine (4) und dem genannten Dickenmessgerät (10) verbunden und so programmiert ist, dass es die Menge des in der Zeiteinheit von der Schäumungs-Maschine (4) dosierten Polyol/Isocyanat-Gemischs in Abhängigkeit von der vom genannten Dickenmessgerät (10; 15) gemessenen Dicke gemäß einer vordefinierten Einstelllogik einstellt, die dazu geeignet ist, die genannte Dicke (S) innerhalb eines vorbestimmten Toleranzbereichs zu halten.

2. Die Anlage (1) nach Anspruch 1, wobei das genannte Steuersystem (20) programmiert ist, um Folgendes zu bewerkstelligen:
- Erhöhen der Menge an Polyol/Isocyanat-Gemisch, die pro Zeiteinheit von der Schäumungs-Maschine (4) dosiert wird, wenn die vom genannten Dickenmessgerät (10; 15) gemessene Dicke geringer ist als eine vorbestimmte Mindestschwellendicke; und
- Verringern der Menge an Polyol/Isocyanat-Gemisch, die pro Zeiteinheit von der Schäumungs-Maschine (4) dosiert wird, wenn die vom genannten Dickenmessgerät (10; 15) gemessene Dicke größer als eine vorbestimmte maximale Schwellendicke ist.

3. Die Anlage (1) nach Anspruch 1 oder 2, die ferner eine Schneidvorrichtung (6) umfasst, die stromabwärts der genannten Polymerisationsbank (5) angeordnet ist und geeignet ist, das geschäumte, geschlossene, hohle Kastenprofil (P2) zu schneiden, um halbfertige Lamellen (G) einer vorbestimmten Länge zu erhalten, wobei das genannte Dickenmessgerät (10; 15) zwischen der genannten Polymerisationsbank (5) und der genannten Schneidvorrichtung (6) angeordnet ist.

4. Die Anlage (1) nach einem der Ansprüche 1 bis 3, wobei das Dickenmessgerät ein berührungsloses Dickenmessgerät (10) ist.

5. Die Anlage (1) nach Anspruch 4, wobei das genannte berührungslose Dickenmessgerät ein Laser-Dickenmessgerät (10) ist.

6. Die Anlage (1) nach Anspruch 5, wobei das genannte Laser-Dickenmessgerät (10) zwei Lasersensoren (11, 12) umfasst, die in einem vorbestimmten Abstand (G) voneinander angeordnet sind, um eine Durchgangsöffnung für ein geschäumtes, geschlossenes, hohles Kastenprofil (P2) durch das genannte Laser-Dickenmessgerät (10) zu begrenzen, wobei jeder Lasersensor (11, 12) als Lasersender und als Laserempfänger wirkt und wobei das genannte Laser-Dickenmessgerät (10) eine Datenverarbeitungseinheit (13) umfasst, die mit beiden genannten Lasersensoren (11, 12) verbunden ist und so programmiert ist, dass sie die Dicke (S) eines geschäumten, geschlossenen, hohlen Kastenprofils (P2), das durch die genannte Durchgangsöffnung (L) verläuft, als die Differenz berechnet zwischen dem vorbestimmten Abstand (G) zwischen den genannten beiden Sensoren (11, 12) und den Abständen (D1, D2) des genannten geschäumten, geschlossenen, hohlen Kastenprofils (P2) von den genannten beiden Lasersensoren (11, 12).

7. Die Anlage (1) nach irgendeinem der Ansprüche von 1 bis 3, wobei das Dickenmessgerät ein Kontakt-Dickenmessgerät (15) ist.

8. Die Anlage (1) nach Anspruch 7, wobei das Kontakt-Dickenmessgerät (15) zwei gegenüberliegende Tasträder (16, 17) und eine Datenverarbeitungseinheit (18) umfasst, die mit beiden genannten Tasträdern (16, 17) verbunden und so programmiert ist, dass sie die Dicke (S) eines geschäumten, geschlossenen, hohlen Kastenprofils (P2), das zwischen den genannten beiden Tasträdern (16, 17) in Kontakt mit beiden gleitet, als einen Abstand (D') zwischen den genannten beiden Tasträdern (16, 17) berechnet.

9. Die Anlage (1) nach irgendeinem der vorstehenden Ansprüche, die eine Führungsvorrichtung (30) umfasst, die geeignet ist, das geschäumte, geschlossene, hohle Kastenprofil (P2) in der Nähe des genannten Dickenmessgeräts (10; 15) so zu führen, dass das geschäumte, geschlossene, hohle Kastenprofil (P2) das Dickenmessgerät (10; 15) durchläuft und der Dickenmessung immer denselben Abschnitt des genannten vorbestimmten zentralen Abschnitts (C) aussetzt.

10. Die Anlage (1) nach Anspruch 9, wobei die genannte Führungsvorrichtung (30) unmittelbar stromaufwärts oder unmittelbar stromabwärts des genannten Dickenmessgeräts (10; 15) angeordnet ist.

11. Ein Verfahren zur Herstellung von Lamellen für Rollläden, das die folgenden Arbeitsschritte umfasst:
- (a) Formen eines geschlossenen, hohlen Kastenprofils aus einem Blechstreifen mit Hilfe einer Profilier-Maschine (3);
- (b) Dosieren einer vorbestimmten Menge einer Mischung aus Polyol und Isocyanat pro Zeiteinheit mittels einer in die Profilier-Maschine (3) integrierten Schäumungs-Maschine (4) in das hohle Kastenprofil, das teilweise offen ist (P1), während es geformt wird;
- (c) Polymerisieren-lassen des Gemischs aus Polyol und Isocyanat, bis ein Polyurethan-Schaum im Inneren des geschlossenen, hohlen Kastenprofils vollständig gebildet ist, um ein geschäumtes, geschlossenes, hohles Kastenprofil (P2) zu erhalten;
**dadurch gekennzeichnet, dass** es die folgenden weiteren Arbeitsschritte umfasst:
- (d) Messen der Dicke (S) eines vorbestimmten zentralen Abschnitts (C) des geschäumten, geschlossenen, hohlen Kastenprofils mittels eines *Inline-*Dickenmessgeräts (10; 15); und
- (e) Einstellen der Menge an Polyol/Isocyanat-Gemisch, die pro Zeiteinheit von der Schäumungs-Maschine (4) dosiert wird, in Abhängigkeit von der Dicke (S), die vom genannten Dickenmessgerät (10) erfasst wird, gemäß einer vordefinierten Einstelllogik, die darauf abzielt, die genannte Dicke (S) innerhalb eines vordefinierten Toleranzbereichs zu halten.

12. Das Verfahren nach Anspruch 11, wobei der genannte Einstellschritt e) so durchgeführt wird, dass Folgendes bewerkstelligt wird:
- Erhöhen der Menge an Polyol/Isocyanat-Gemisch, die pro Zeiteinheit von der Schäumungs-Maschine (4) dosiert wird, wenn die vom genannten Dickenmessgerät (10; 15) gemessene Dicke geringer als eine vorbestimmte Mindestschwellendicke ist; und
- Verringern der Menge an Polyol/Isocyanat-Gemisch, die pro Zeiteinheit von der Schäumungs-Maschine (4) dosiert wird, wenn die vom genannten Dickenmessgerät (10; 15) gemessene Dicke größer als eine vorbestimmte maximale Schwellendicke ist.

13. Das Verfahren nach Anspruch 11 oder 12, das ferner den Arbeitsschritt f) des Schneidens des geschäumten, geschlossenen, hohlen Kastenprofils (P2) mittels einer Schneidvorrichtung (6) umfasst, um halbfertige Lamellen (G) mit einer vorbestimmten Länge zu erhalten, wobei der genannte Schritt f) in einem Bereich des geschäumten, geschlossenen, hohlen Kastenprofils (P2) durchgeführt wird, der bereits dem Schritt d) des Messens der Dicke (S) unterzogen wurde.

14. Das Verfahren nach irgendeinem der Ansprüche von 11 bis 13, wobei der Messschritt d) mittels eines berührungslosen Dickenmessgeräts (10) durchgeführt wird.

15. Das Verfahren nach Anspruch 14, wobei das genannte berührungslose Dickenmessgerät ein Laser-Dickenmessgerät (10) ist.

16. Das Verfahren nach Anspruch 15, wobei das genannte Laser-Dickenmessgerät (10) zwei Lasersensoren (11, 12) umfasst, die in einem vorbestimmten Abstand (G) voneinander angeordnet sind, um eine Durchgangsöffnung (L) für ein geschäumtes, geschlossenes, hohles Kastenprofil (P2) durch das genannte Laser-Dickenmessgerät (10) zu begrenzen, wobei jeder Lasersensor (11, 12) als Lasersender und als Laserempfänger wirkt und wobei das genannte Laser-Dickenmessgerät (10) eine Datenverarbeitungseinheit (13) umfasst, die mit beiden genannten Lasersensoren (11, 12) verbunden ist und so programmiert ist, dass sie die Dicke (S) eines geschäumten, geschlossenen, hohlen Kastenprofils (P2), das durch die genannte Durchgangsöffnung verläuft, als die Differenz berechnet zwischen dem Abstand (G) zwischen den genannten beiden Sensoren (11, 12) und den Abständen (D1, D2) des genannten geschäumten, geschlossenen, hohlen Kastenprofils (P2) von den genannten beiden Lasersensoren (11, 12).

17. Das Verfahren nach irgendeinem der Ansprüche von 11 bis 13, wobei der Messschritt d) mittels eines Kontakt-Dickenmessgeräts (15) durchgeführt wird.

18. Das Verfahren nach Anspruch 17, wobei das Kontakt-Dickenmessgerät (15) zwei gegenüberliegende Tasträder (16, 17) und eine Datenverarbeitungseinheit (18) umfasst, die mit beiden genannten Tasträdern (16, 17) verbunden und so programmiert ist, dass sie die Dicke (S) eines geschäumten, geschlossenen, hohlen Kastenprofils (P2), das zwischen den genannten beiden Tasträdern (16, 17) in Kontakt mit beiden gleitet, als einen Abstand (D') zwischen den genannten beiden Tasträdern (16, 17) berechnet.

19. Das Verfahren nach irgendeinem der Ansprüche von 11 bis 18, umfassend einen weiteren Schritt g) des Führens des geschäumten, geschlossenen, hohlen Kastenprofils (P2) in die Nähe des genannten Dickenmessgeräts (10; 15), sodass das geschäumte, geschlossene, hohle Kastenprofil (P2) das Dickenmessgerät (10; 15) durchläuft und der Dickenmessung immer denselben Abschnitt des genannten vorbestimmten zentralen Abschnitts (C) aussetzt.

## Revendications

1. Ligne de production (1) de lattes de volets roulants, comprenant :
- une machine de profilage (3) adaptée pour former un profil de section de boîte fermé, creux à partir d'une bande de métal ;
- une machine de moussage (4) intégrée dans la machine de profilage (3) et adaptée pour doser dans le profil de section de boîte creux, en partie ouvert (P1) pendant sa formation, une quantité prédéterminée d'un mélange de polyol et d'isocyanate par unité de temps ; et
- un banc de polymérisation (5), qui est placé en aval de la machine de profilage (3), pour obtenir un profil de section de boîte moussé, fermé, creux (P2) ;
**caractérisée en ce qu'**elle comprend un appareil de mesure d'épaisseur (10 ; 15) adapté pour mesurer en ligne l'épaisseur (S) d'une partie centrale (C) prédéfinie du profil de section de boîte (P2) moussé, fermé, creux, dans laquelle ledit appareil de mesure d'épaisseur (10, 15) est placé en aval dudit banc de polymérisation (5), et **en ce qu'**elle comprend un système de commande (20) relié à ladite machine de moussage (4) et audit appareil de mesure d'épaisseur (10) et programmé pour ajuster la quantité de polyol/isocyanate dosée par unité de temps par la machine de moussage (4) en fonction de l'épaisseur mesurée par ledit appareil de mesure d'épaisseur (10 ; 15) selon des logiques d'ajustement prédéfinies adaptées pour maintenir ladite épaisseur (S) dans une plage de tolérance prédéterminée.

2. Ligne (1) selon la revendication 1, dans laquelle ledit système de commande (20) est programmé pour :
- augmenter la quantité du mélange de polyol/isocyanate dosée par unité de temps par la machine de moussage (4) si l'épaisseur mesurée par ledit appareil de mesure d'épaisseur (10 ; 15) est inférieure à une épaisseur de seuil minimum prédéterminée ; et
- réduire la quantité du mélange de polyol/isocyanate dosée par unité de temps par la machine de moussage (4) si l'épaisseur mesurée par ledit appareil de mesure d'épaisseur (10 ; 15) est supérieure à une épaisseur de seuil maximum prédéterminée.

3. Ligne (1) selon la revendication 1 ou 2, comprenant en outre un appareil de découpe (6), qui est placé en aval dudit banc de polymérisation (5) et est adapté pour découper le profil de section de boîte (P2) moussé, fermé, creux pour obtenir des lattes (G) semi-finies d'une longueur prédéterminée, dans laquelle ledit appareil de mesure d'épaisseur (10 ; 15) est placé entre ledit banc de polymérisation (5) et ledit appareil de découpe (6).

4. Ligne (1) selon l'une quelconque des revendications 1 à 3, dans laquelle l'appareil de mesure d'épaisseur est un appareil de mesure d'épaisseur (10) sans contact.

5. Ligne (1) selon la revendication 4, dans laquelle ledit appareil de mesure d'épaisseur sans contact est un appareil de mesure d'épaisseur laser (10).

6. Ligne (1) selon la revendication 5, dans laquelle ledit appareil de mesure d'épaisseur laser (10) comprend au moins deux capteurs laser (11, 12) qui sont disposés à une distance prédéterminée (G) l'un de l'autre pour délimiter une ouverture pour un profil de section de boîte (P2) moussé, fermé, creux par ledit appareil de mesure d'épaisseur laser (10), dans laquelle chaque capteur laser (11, 12) fait office d'émetteur laser et de récepteur laser et dans laquelle ledit appareil de mesure d'épaisseur laser (10) comprend une unité de traitement de données (13) qui est reliée à la fois aux deux capteurs laser (11, 12) et est programmée pour calculer l'épaisseur (S) d'un profil de section de boîte (P2) moussé, fermé, creux, traversant ladite ouverture (L) comme la différence entre la distance (G) prédéterminée entre lesdits deux capteurs (11, 12) et les distances (D1, D2) dudit profil de section de boîte (P2) moussé, fermé, creux par rapport auxdits deux capteurs laser (11, 12).

7. Ligne (1) selon les revendications 1 à 3, dans laquelle l'appareil de mesure d'épaisseur est un appareil de mesure d'épaisseur à contact (15).

8. Ligne (1) selon la revendication 7, dans laquelle l'appareil de mesure à contact (15) comprend deux roues palpeuses (16, 17) opposées et une unité de traitement de données (18) qui est reliée à la fois aux deux roues palpeuses (16, 17) et est programmée pour calculer l'épaisseur (S) d'un profil de section de boîte (P2) moussé, fermé, creux glissant entre lesdites deux roues palpeuses (16, 17) en contact avec celles-ci comme une distance (D') entre lesdites deux roues palpeuses (16, 17).

9. Ligne (1) selon l'une quelconque des revendications précédentes, comprenant un dispositif de guidage (30) adapté pour guider le profil de section de boîte (P2) moussé, fermé, creux à proximité dudit appareil de mesure d'épaisseur (10 ; 15) de telle sorte que le profil de section de boîte (P2) moussé, fermé, creux traverse l'appareil de mesure d'épaisseur (10 ; 15) en exposant toujours la même section de ladite partie centrale (C) prédéterminée à la mesure d'épaisseur.

10. Ligne (1) selon la revendication 9, dans laquelle ledit dispositif de guidage (30) est placé immédiatement en aval ou immédiatement en amont dudit appareil de mesure d'épaisseur (10 ; 15).

11. Procédé de production de lattes de volets roulants, comprenant les étapes de travail suivantes :
- (a) formation d'un profil de section de boîte fermé creux à partir d'une bande de feuille de métal au moyen d'une machine de profilage (3) ;
- (b) dosage dans le profil de section de boîte creux, en partie ouvert (P1) alors qu'il a été formé, d'une quantité prédéterminée d'un mélange de polyol et d'isocyanate par unité de temps au moyen d'une machine de moussage (4) intégrée dans la machine de profilage (3) ;
- (c) permission de la polymérisation du mélange de polyol et d'isocyanate jusqu'à ce qu'une mousse de polyuréthane soit totalement formée à l'intérieur du profil de section de boîte fermé creux de manière à obtenir un profil de section de boîte (P2) moussé, fermé, creux ;
**caractérisé en ce qu'**il comprend les étapes de travail supplémentaires :
- (d) mesure de l'épaisseur (S) d'une partie centrale (C) prédéterminée du profil de section de boîte moussé, fermé, creux au moyen d'un appareil de mesure d'épaisseur (10 ; 15) en ligne ; et
- e) ajustement de la quantité du mélange de polyol/isocyanate dosée par unité de temps par la machine de moussage (4) en fonction de l'épaisseur (S) détectée par ledit appareil de mesure d'épaisseur (10) selon des logiques d'ajustement prédéfinies visant à maintenir ladite épaisseur (S) dans une plage de tolérance prédéfinie.

12. Procédé selon la revendication 11, dans lequel l'étape d'ajustement e) est réalisée de manière à :
- augmenter la quantité du mélange de polyol/isocyanate dosée par unité de temps par la machine de moussage (4) si l'épaisseur mesurée par ledit appareil de mesure d'épaisseur (10 ; 15) est inférieure à une épaisseur de seuil minimum prédéterminée ; et
- réduire la quantité du mélange de polyol/isocyanate dosée par unité de temps par la machine de moussage (4) si l'épaisseur mesurée par ledit appareil de mesure d'épaisseur (10 ; 15) est supérieure à une épaisseur de seuil maximum prédéterminée.

13. Procédé selon la revendication 11 ou 12, comprenant en outre l'étape de travail f) de découpe du profil de section de boîte (P2) moussé, fermé, creux au moyen d'un appareil de coupe (6) pour obtenir des lattes semi-finies (G) d'une longueur prédéterminée, dans lequel ladite étape f) est réalisée sur une section du profil de section de boîte (P2) moussé, fermé, creux ayant déjà été soumis à l'étape d) de mesure de l'épaisseur (S).

14. Procédé selon l'une quelconque des revendications 11 à 13, dans lequel l'étape de mesure d) est réalisée au moyen d'un appareil de mesure sans contact (10).

15. Procédé selon la revendication 14, dans lequel ledit appareil de mesure sans contact est un appareil de mesure d'épaisseur laser (10).

16. Procédé selon la revendication 15, dans lequel ledit appareil de mesure laser (10) comprend deux capteurs laser (11, 12) qui sont disposés à une distance (G) prédéterminée l'un de l'autre pour délimiter une ouverture (L) pour un profil de section de boîte (P2) moussé, fermé, creux par ledit appareil de mesure d'épaisseur laser (10), dans lequel chaque capteur laser (11, 12) fait office d'émetteur laser et de récepteur laser et dans lequel ledit appareil de mesure d'épaisseur laser (10) comprend une unité de traitement de données (13), qui est reliée à la fois aux eux capteurs laser (11, 12) et est programmée pour calculer l'épaisseur d'un profil de section de boîte (P2) moussé, fermé, creux traversant ladite ouverture comme la différence entre la distance (G) entre les deux capteurs (11, 12) et les distances (D1, D2) dudit profil de section de boîte (P2) moussé, fermé, creux par rapport auxdits deux capteurs laser (11, 12).

17. Procédé selon l'une quelconque des revendications 11 à 13, dans lequel l'étape de mesure d) est réalisée au moyen d'un appareil de mesure à contact (15).

18. Procédé selon la revendication 17, dans lequel l'appareil de mesure de contact (15) comprend deux roues palpeuses (16, 17) opposées et une unité de traitement de données (18) qui est reliée à la fois aux deux roues palpeuses (16, 17) et est programmée pour calculer l'épaisseur (S) d'un profil de section de boîte (P2) moussé, fermé, creux glissant entre lesdites deux roues palpeuses (16, 17) en contact avec celles-ci comme une distance (D') entre lesdites deux roues palpeuses (16, 17).

19. Procédé selon l'une quelconque des revendications 11 à 18 ; comprenant une autre étape g) de guidage du profil de section de boîte (P2) moussé, fermé, creux à proximité dudit appareil de mesure d'épaisseur (10 ; 15) de telle sorte que le profil de section de boîte (P2) moussé, fermé, creux traverse l'appareil de mesure d'épaisseur (10 ; 15) en exposant toujours la même section de ladite partie centrale (C) prédéterminée à la mesure d'épaisseur.
